(19) Europäisches Patentamt
European Patent Office
Office européen des brevets

(11) **EP 1 826 646 B1**

(12) **EUROPÄISCHE PATENTSCHRIFT**

(45) Veröffentlichungstag und Bekanntmachung des Hinweises auf die Patenterteilung:
**05.01.2011 Patentblatt 2011/01**

(51) Int Cl.:
***G05B 19/418*** *(2006.01)*

(21) Anmeldenummer: **07010741.2**

(22) Anmeldetag: **30.12.2004**

(54) **Verfahren, Knoten und Netzwerk zum zyklischen Versenden von Ethernet-Telegrammen**

Method, node and network for cyclical transmission of ethernet telegrams

Procédé, noeud et réseau destinés à l'envoi cyclique de télégrammes par Ethernet

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **09.01.2004 DE 102004001435**

(43) Veröffentlichungstag der Anmeldung:
**29.08.2007 Patentblatt 2007/35**

(60) Teilanmeldung:
**07020362.5 / 1 884 851**

(62) Dokumentnummer(n) der früheren Anmeldung(en) nach Art. 76 EPÜ:
**04804417.6 / 1 702 245**

(73) Patentinhaber: **Beckhoff Automation GmbH**
**33415 Verl (DE)**

(72) Erfinder:
• **Janssen, Dirk**
**33415 Verl (DE)**
• **Beckhoff, Hans**
**33415 Verl (DE)**

(74) Vertreter: **Patentanwaltskanzlei WILHELM & BECK**
**Prinzenstrasse 13**
**80639 München (DE)**

(56) Entgegenhaltungen:
**WO-A-02/075465**

**Beschreibung**

Die Erfindung betrifft ein Verfahren, eine Schnittstelle und ein Netzwerk zum zyklischen Versenden von Ethernet-Telegrammen.

Das Ethernet ist die am weitesten verbreitete Technologie, mit der in lokalen Kommunikationsnetzen, sog. Local Area Networks (LAN), Daten aktuell mit einer Geschwindigkeit bis zu 100 Mio. Bits/s (Mbps) übertragen werden können. LANs sind lokale Kommunikationsnetzwerke, die auf ein geografisches Gebiet begrenzt sind und sich aus einem oder mehreren Servern und Arbeitsstationen, sog. Knoten zusammensetzen, die über eine Übertragungsstrecke, z.B. ein Koaxial-, Glasfaser- oder Twisted Pair-Kabel verbunden sind. Bei LANs sind verschiedenste Netzwerktopologien möglich, wobei die bekanntesten die Bus-, Ring-, Stern- oder Baumstrukturen sind.

LANs werden mit einem Netzwerk-Betriebssystem und einem einheitlichen Netzwerk-Protokoll betrieben. Das Ethernet stellt ein mögliches Netzwerkprotokoll dar und unterstützt dabei die unterschiedlichsten Kommunikationsprotokolle, z.B. das TCP/IP-Protokoll oder das IPX-Protokoll. Im OSI-Schichtenmodell, dem internationalen Referenzmodell für Datenübertragung in Netzwerken, das aus einem Schichtenstapel aus sieben Schichten aufgebaut ist, wobei für jede Schicht eine Menge von Protokollen definiert ist, die jeweils der nächst höheren Schicht ihre Dienste zur Verfügung stellen, ist das Ethernet der zweiten Schicht, der sog. Leitungsschicht zugeordnet. In dieser Leitungsschicht werden die zu versendeten Daten zu Telegrammen gebündelt, denen spezifische Informationen für das jeweilige Kommunikationsprotokoll hinzugefügt werden. Die Leitungsschicht ist im Netzwerk für den Transport der Datentelegramme von Knoten zu Knoten und für die Fehlererkennung zuständig.

Beim Ethernet-Konzept ist die Leitungsschicht in zwei Ebenen unterteilt, wobei die erste Ebene den Daten einen Kopfabschnitt, einen sog. Startkennung hinzufügen, der Informationen enthält, die für eine korrekte Datenübertragung vom Empfängerprotokoll benötigt werden. In der zweiten Ebene des Ethernet-Protokolls wird dann das Datentelegramm mithilfe einer zusätzlichen Präambel und eines Endabschnitts, einer sog. Checksumme, für den Transport von Knoten zu Knoten eingekapselt. Mit solchen Ethernet-Telegrammen lassen sich Daten mit einer Länge von bis zu 1500 Bytes übertragen, wobei zwischen den einzelnen Ethernet-Telegrammen eine feste Pausenzeit einzuhalten ist.

Für das Versenden und das Empfangen der Ethernet-Telegramme auf der Ethernet-Übertragungsstrecke ist ein Ethernet-Controller, auch als Media Access Controller (MAC) bezeichnet, zuständig, der zwischen den Knoten und die Ethernet-Übertragungsstrecke geschaltet und über ein Bussystem mit dem Knoten verbunden ist. Dieser Ethernet-Controller wird in der Regel durch einen Software-Treiber, der im jeweiligen Betriebssystem des Knotens eingebunden ist, gesteuert. Der Ethernet-Controller umfasst im Allgemeinen ein Sende- und ein Empfangs-Schieberegister, um die Ethernet-Übertragungsstrecke von dem physikalischen Speicher des Knotens zu entkoppeln. Moderne Ethernet-Controller besitzen weiter in der Regel eine direkte Zugriffsmöglichkeit auf den physikalischen Speicher des Knotens, einen sog. Direct Memory Access (DMA), wodurch der Software-Treiber im Betriebssystem des Knotens zeitsparend die zu sendenden und zu empfangenen Ethernet-Telegramme direkt im Speicher des Knotens ablegen bzw. aus diesem Speicher abholen kann.

Ethernet-Protokolle werden vornehmlich bei Bürokommunikationsnetzwerken eingesetzt. Aufgrund der Vorteile des Ethernet-Konzepts bei der Nutzung von Standard-Hard- und -softwarekomponenten sowie der Möglichkeit, bei einfacher Vernetzungstechnologie hohe Datenübertragungsraten zu erreichen, werden Ethernet-Kommunikationsnetzwerke zunehmend auch in der industriellen Fertigung zum Datenaustausch zwischen Arbeitsstationen einzusetzen. Beim Einsatz des Ethernet-Protokolls in der Automatisierungstechnik muss jedoch mithilfe zusätzlicher aufwändiger Hard- und/oder Softwaretechniken die Echtzeitfähigkeit der Ethernet-Datenübertragung sichergestellt werden. Bei der Steuerung von Maschinen ist es in der Regel erforderlich, dass eine zyklische Bearbeitung einer Steuerungsaufgabe im Wesentlichen ohne zeitliche Schwankungen, d.h. sog. Jitter erfolgt, wobei mit einer vorhersehbaren Antwortzeit auf die Regelanforderung reagiert wird.

Sollen z. B. im Rahmen einer auf einem als Knoten in eine Ethernet-Netzwerk ausgebildeten Steuerungsrechner laufenden Echtzeitanwendung zyklisch Ethernet-Telegramme versendet werden, um per Ethernet-Übertragungsstrecke angebundene Sensoren und Aktoren anzusprechen, übergibt der Steuerungsrechner über den im Betriebssystem integrierten Software-Treiber in jedem Steuerungszyklus entsprechende Ethernet-Telegramme an seinen Ethernet-Controller zum Versenden. Dabei fügt der Software-Treiber vor der Übergabe an den Ethernet-Controller den zu versendenden Echtzeitdaten automatisch die in der Ethernet-Übertragungsnorm (IEEE 802.3) definierten Pausenzeiten, Startkennungen, Präambeln und Checksummen hinzu. Der Ethernet-Controller lädt dann, vorzugsweise mithilfe der Direct Memory Access-Übertragung, die entsprechenden Ethernet-Telegramme in seinen Sende-Schieberegister und beginnt ab einem bestimmten Füllstand des Sende-Schieberegisters mit dem Versenden der Ethernet-Telegramme auf der Ethernet-Übertragungsstrecke.

In dieser Sende-Abfolge des Steuerungsrechners mit angeschlossenem Ethernet-Controller sind mehrere Jitter-behaftete Vorgänge enthalten, deren Jitter sich im ungünstigsten Fall aufsummieren und dann einen maximal zulässigen Wert für die Echtzeitanwendung, der in der Regel im Bereich von einigen wenigen Mikrosekunden liegt, übersteigt. Zum Jitter tragen dabei die schwankenden Interrupt-Latenzzeiten im Knoten beim Erzeugen der zu versendenden Daten und die Laufzeitschwankungen des bis zum Senden des Ethernet-Telegramms durchlaufenden Programmcodes bei. Bei modernen Steuerungsrechnern, die über einen Cache-Speicher verfügen, schwankt zusätzlich auch die Laufzeit der Programmcodes, da je nach Cache-Inhalt unterschiedlich lange auf den angeforderten Inhalt des Speichers im Knoten gewartet werden muss.

Der Ethernet-Controller ist in der Regel über ein Bussystem mit dem Knoten verbunden, wobei häufig ein PCI-Bus verwendet wird. Da ein solcher Bus im Allgemeinen auch von anderen Systemteilen genutzt wird, kann es bei der Buszuteilung zu unterschiedlich langen Wartezeiten kommen. Dies gilt sowohl dann, wenn der Ethernet-Controller per Direct Memory Access-Übertragung auf den physikalischen Speicher des Steuerungsrechners zugreift, als auch für den Fall, dass die Echtzeitdaten unter Kontrolle des Software-Treibers über das Bussystem übertragen werden. Es treten immer ähnliche Jitter bei der Buszuteilung auf. Der Ethernet-Controller beginnt darüber hinaus immer erst ab einem bestimmten Füllstand des Sende-Schieberegisters mit dem Versenden der Ethernet-Telegramme auf der Ethernet-Übertragungsstrecke. Dabei kann sich dann das Senden der Ethernet-Telegramme je nach Füllstand des Sende-Schieberegisters unterschiedlich lange verzögern, was zu einem zusätzlichen Jitter führt.

Ist der sich ergebende Gesamtjitter beim Sendevorgang höher als für die jeweilige Echtzeitanwendungen maximal zulässig Jitter, muss mithilfe eines aufwändigen Verfahrens, wie z.B. dem IEEE 1588 (IEEE Standard for a Precision Clock Synchronization Protocol for Networked Measurement and Control Systems) eine entsprechend genaue Zeitbasis in allen Kommunikationsteilnehmern an der Ethernet-Übertragungsstrecke geschaffen werden, mit deren Hilfe sich dann der Jitter kompensieren lässt.

MANDEVILLE B; SHAH A V: "Benchmarking Methodology for Ethernet Switches <draft-ietf-bmwg-ethernet-switches-00.txt> " INTERNET DRAFT, Dezember 1995 (1995-12), Seiten 1-14, XP002322529 offenbart ein Verfahren und eine Vorrichtung zur Ethernet-Telegrammübertragung auf einem Ethernet-Netzwerk.

Aus der WO 02/075465 ist ein Verfahren zum Versenden von Echtzeitdaten auf einem Ethernet-Netzwerk, ein Knoten an einer Ethernet-Übertragungsstrecke und ein Ethernet-Netzwerk bekannt, bei der eine auf einem Knoten ausgeführte Echtzeitanwendung mit der Ethernet-Telegrammübertragung synchronisiert werden kann.

Aufgabe der Erfindung ist es, ein Verfahren zum Versenden von Daten in Form von Ethernet-Telegrammen auf einer Ethernet-Übertragungsstrecke, einen Knoten an einer Ethernet-Übertragungsstrecke und ein Ethernet-Netzwerk bereitzustellen, mit denen sich auf einfache Weise jitterfrei und zyklisch Ethernet-Telegramme mit Echtzeitdaten versenden lassen.

Diese Aufgabe wird mit einem Verfahren nach Anspruch 1, einem Knoten nach Anspruch 8 und einem Ethernet-Netzwerk nach Anspruch 11 gelöst. Bevorzugte Weiterbildungen sind in den abhängigen Ansprüchen angegeben.

Erfindungsgemäß wird zum Versenden von Daten in Form von Ethernet-Telegrammen auf einer Ethernet-Übertragungsstrecke mit Hilfe einer Schnittstelle zum Anbinden eines Knotens an die Ethernet-Übertragungsstrecke die zu versendenden Daten mithilfe einer Umsetzeinheit gemäß einer Übertragungsnorm des Ethernet-Protokolls umgesetzt, um Ethernet-Telegramme bereitzustellen, und mithilfe einer Sendeeinheit dann fortlaufend die bereitgestellten Ethernet-Telegramme versendet, wobei kontinuierliche Ethernet-Telegramme auf die Ethernet-Übertragungsstrecke ausgegeben werden.

Durch das erfindungsgemäße kontinuierliche Senden von Ethernet-Telegrammen wird eine exakte Wiederholbarkeit des Sendevorgangs und damit ein jitterfreies Versenden der Ethernet-Telegramme ermöglicht. Dadurch, dass die Schnittstelle zur Anbindung des Knotens an das Ethernet im Anschluss an ein gesendetes Ethernet-Telegramm direkt das nächste Ethernet-Telegramm versendet, wird gewährleistet, dass alle jitterbehafteten Vorgänge in der Sendeabfolge vom Umsetzen der zu versendenden Daten in Ethernet-Telegramme bis zur Ausgabe der Telegramme auf die Ethernet-Übertragungsstrecke kompensiert werden. Das Timing des Sendevorgangs wird nämlich ausschließlich durch die Schnittstelle des Knotens zum Ethernet bestimmt, wobei durch das kontinuierliche Versenden der Telegramme deren völlige Jitterfreiheit sichergestellt wird.

Erfindungsgemäß ist weiter vorgesehen, dass dann, wenn die Daten Echtzeitdaten sind, eine die zu versendenden Echtzeitdaten erzeugende Echtzeitanwendung im Knoten mit dem Sendevorgang der Ethernet-Telegramme synchronisiert ist. Diese Vorgehensweise verhindert einen Überlauf mit Ethernet-Telegrammen in der Schnittstelle beim Sendevorgang, der dazu führen würde, dass die Ethernet-Telegramme nicht mehr schnell genug versendet werden können. Dadurch, dass die im Knoten ablaufende Echtzeitanwendung auf die Zeitbasis der den Sendevorgang ausführenden Schnittstelle abgestimmt ist, wird gewährleistet, dass der Knoten Ethernet-Telegramme nur abgestimmt mit dem Sendevorgang der Schnittstelle liefert und somit kein Überlauf an Ethernet-Telegrammen auftritt.

Gemäß einer bevorzugten Ausführungsform der Erfindung wird zum fortlaufenden Senden der bereitgestellten Ethernet-Telegramme bei einer vorgegebenen Länge der Ethernet-Telegramme die Länge der Zykluszeit im Rahmen der maximal zulässigen Dauer des Zyklus angepasst, um während der gesamten Zykluszeit kontinuierlich Ethernet-Telegramme auf die Ethernet-Übertragungsstrecke auszugeben. Diese Vorgehensweise sorgt für einen kontinuierlichen Sendevorgang der Ethernet-Telegrammen im Rahmen einer vorgegebenen maximalen Sendezyklusdauer bei gleichzeitig optimaler Nutzung der Zykluslänge, wobei der bei der Erzeugung der Ethernet-Telegramme auftretende Jitter völlig ausgeglichen wird.

Gemäß einer weiteren bevorzugten Ausführungsform der Erfindung wird beim fortlaufenden Versenden der Ethernet-Telegramme mithilfe der Schnittstelle die Anzahl und/oder die Länge der in einem Zyklus zu versendenden Ethernet-Telegramme an eine vorgegebene Zykluszeit so angepasst, dass während der gesamten vorgegebenen Zykluszeit kontinuierlich Ethernet-Telegramme auf die Ethernet-Übertragungsstrecke ausgegeben werden können. Diese Vorgehensweise ermöglicht einen kontinuierlichen Sendevorgang der Ethernet-Telegrammen im Rahmen eines Sendezyklus bei gleichzeitig optimaler Nutzung der im Zyklus möglichen Datenbreite, wobei der bei der Erzeugung der Ethernet-Telegramme auftretende Jitter völlig ausgeglichen wird.

Gemäß einer weiteren bevorzugten Ausführungsform werden bei der Anpassung der Ethernet-Telegramme die Baudrate der Ethernet-Übertragungsstrecke, die Länge der beim Umsetzen der Daten gemäß der Übertragsnorm des Ethernet-Protokolls jeweils in das Ethernet-Telegramm eingefügten Startkennung, Präambel und Checksumme und die Länge der zwischen den zu versendenden Ethernet-Telegrammen einzuhaltenden Pausenzeiten berücksichtigt. Durch diese Vorgehensweise lässt sich auf einfache Weise die optimale Länge der kontinuierlich auf der Ethernet-Übertragungsstrecke zu versendenden Ethernet-Telegramme bestimmen. Bevorzugt ist dabei weiterhin, dass berücksichtigt wird, dass dann, wenn die berechnete Länge des Ethernet-Telegramms größer als die maximal mögliche Länge des Ethernet-Telegramms ist, die Anzahl und die Länge der zu sendenden Ethernet-Telegramme so gewählt wird, dass in einem Zyklus mehrere vorzugsweise gleich lange Ethernet-Telegramme versendet werden, deren gemeinsame Bitlänge der Zykluszeit entspricht. Hierdurch wird sichergestellt, dass auf einfache Weise eine optimale Länge der zu versendenden Ethernet-Telegramme bestimmt werden kann.

Gemäß einer weiteren bevorzugten Ausführungsform werden die bereitgestellten Ethernet-Telegramme in einem Zwischenspeicher abgelegt, wobei die Schnittstelle den Sendevorgang in Abhängigkeit eines vorgegebenen Füllstandes im Zwischenspeicher startet. Diese Vorgehensweise sorgt dafür, dass immer genügend zu sendende Ethernet-Telegramme in der Schnittstelle vorhanden sind, um einen kontinuierlichen Sendevorgang zu gewährleisten. Hierdurch wird verhindert, dass der Sendevorgang leerläuft und es dadurch zu Telegrammverzögerungen kommt, die dann zu einer Zyklusverletzung führen würden.

Gemäß einer weiteren bevorzugten Ausführungsform ist das Ethernet-Netzwerk mit der Ethernet-Übertragungsstrecke, an der eine Mehrzahl von Knoten angebunden sind, so ausgelegt, dass die Ethernet-Telegramme auf dem Sendekanal kollisionsfrei übertragen werden können. Hierdurch wird gewährleistet, dass auf dem Ethernet kontinuierlich gesendet werden kann, ohne dass es aufgrund von Kollisionen auf der Übertragungsstrecke zu einer Unterbrechung des Sendevorgangs und damit zu einer Zyklusverletzung kommt.

Bevorzugt ist dabei weiterhin, dass die Ethernet-Übertragungsstrecke eine ringförmig angeordnete Topologie aufweist, wobei die vom Sendeknoten versandten Ethernet-Telegramme von einem Knoten zum nächsten weitergeleitet werden. Diese Vorgehensweise ermöglicht eine kollisionsfreie Übertragung der Ethernet-Telegramme mit geringer Verzögerung von einem Knoten zum nächsten.

Die Erfindung wird anhand der beigefügten Zeichnungen näher erläutert. Es zeigen:

Fig. 1A ein Ethernet-Netzwerk;
Fig. 1B einen erfindungsgemäßen Auslegung eines Knoten-Anschlusses im Ethernet-Netzwerk;
Fig. 2A ein Ethernet-Telegramm und
Fig. 2B einen erfindungsgemäßen Sendevorgang.

Das Ethernet-Konzept ist der am weitesten verbreitete Kommunikationsstandard in lokal begrenzten Kommunikationsnetzwerken (LAN), über die sich auf einfache Weise Datenressourcen zwischen Arbeitsstationen, im Allgemeinen Computer oder Maschinen, im Weiteren auch als Knoten bezeichnet, gemeinsam nutzen lassen. Das Ethernet basiert dabei auf einem LAN-Aufbau, bei dem eine Mehrzahl von Knoten über ein gemeinsames Übertragungsmedium miteinander verbunden sind, wobei das Ethernet-Konzept die Verkapselung der zu übermittelnden Daten in Datenpaketen, im Weiteren auch als Ethernet-Telegramme bezeichnet, mit einem vorbestimmten Format vornimmt. Das Ethernet besteht dabei aus drei Bereichen, nämlich der Übertragungsstrecke und den Netzwerk-Schnittstellen, also der Hardware, der Menge an Protokollen, die den Zugriff auf die Ethernet-Übertragungsstrecke steuern, und dem Ethernet-Telegrammformat.

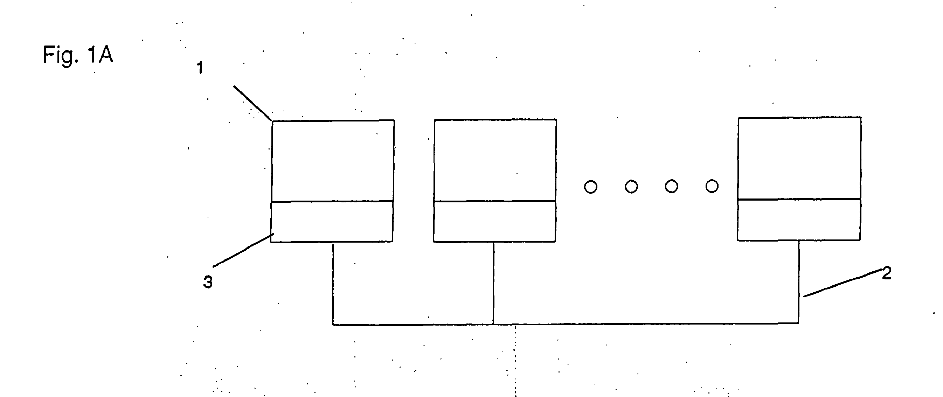

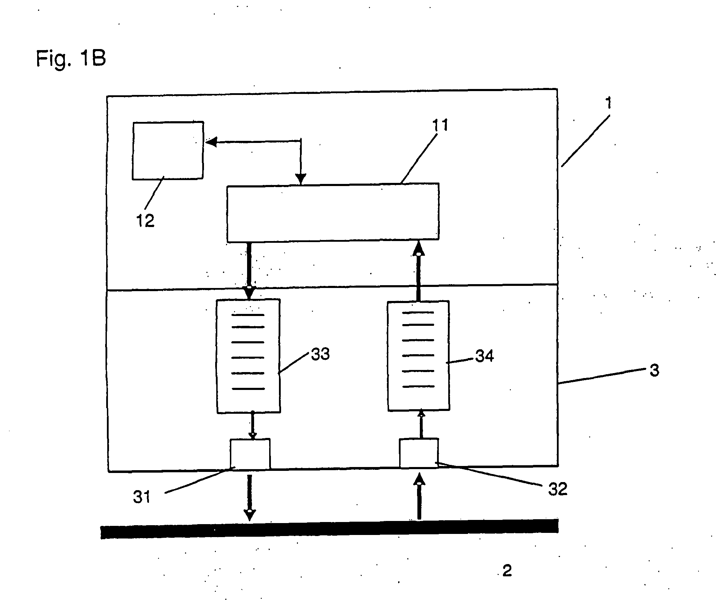

Fig. 1A zeigt schematisch ein Ethernet-Netzwerk, bei dem mehrere Knoten 1 über eine Ethernet-Übertragungsstrecke 2 miteinander verbunden sind. Die Anbindung des Knotens an die Ethernet-Übertragungsstrecke erfolgt dabei mithilfe eines Ethernet-Controllers 3, der vorzugsweise in den zugehörigen Knoten integriert ist. Ein erfindungsgemäßer Knoten 1 mit angeschlossenem Ethernet-Controller 3 zur Anbindung an die Ethernet-Übertragungsstrecke 2 ist im Detail in Fig. 1B gezeigt. Für das Versenden der Ethernet-Telegramme im Ethernet-Controller ist eine Codiereinheit 31 zuständig, für den Empfang der Ethernet-Telegramme von der Übertragungsstrecke 2 eine Decodiereinheit 32. An die Codiereinheit 31 bzw. die Decodiereinheit 32 ist jeweils ein als Schieberegister ausgelegter Zwischenspeicher 33, 34 angeschlossen, um die zu versendenden bzw. empfangenen Ethernet-Telegramme zwischenzuspeichern. Diese Sende- und Empfangs-Schieberegister 33, 34 wiederum sind vorzugsweise so ausgelegt, dass sie auf einen physikalischen Speicher 11 im Knoten 1 direkt mithilfe des sogenannten Direct Memory Access (DMA) Modus zugreifen können. Alternativ besteht die Möglichkeit, dass der Datenaustausch zwischen dem Sende-Schiebespeicher 33 bzw. dem Empfangs-Schiebespeicher 34 und dem physikalischen Speicher 11 über eine zentrale Recheneinheit (CPU) 12 des Knotens 1 erfolgt. Der direkte Zugriff über den DMA-Modus ermöglicht jedoch einen beschleunigten Datenaustausch.

Die Steuerung des Datenaustausches zwischen dem physikalischen Speicher 11 des Knotens 1 und der Schnittstelle 2 erfolgt in der Regel durch die CPU 12 des Knotens 1. Die CPU 12 des Knotens verwaltet weiter auch alle zum Betrieb des Ethernet notwendigen Vorgänge, d.h. führt das Management des Sende- und Empfangsvorgangs durch und sorgt für die Verkapselung der zu versendenden Daten des Knotens in Ethernet-Telegramme bzw. das Entpacken der Daten aus den empfangenen Ethernet-Telegrammen. Das auf der CPU 12 des Knotens 1 implementierte Betriebssystem weist in der Regel eine geschichtete Softwarestruktur auf, um eine protokollspezifische Bearbeitung von einer telegramm- und hardwarespezifischen Bearbeitung zu trennen. Dadurch ist es möglich, unterschiedliche Kommunikationsprotokolle beim Ethernet-Standard einzusetzen, ohne am hardwarespezifischen Treiber Änderungen durchführen zu müssen. Gleichzeitig kann dann auch die Hardware des Knotens geändert werden, ohne gleichzeitig eine protokollspezifische Softwareänderung ausführen zu müssen.

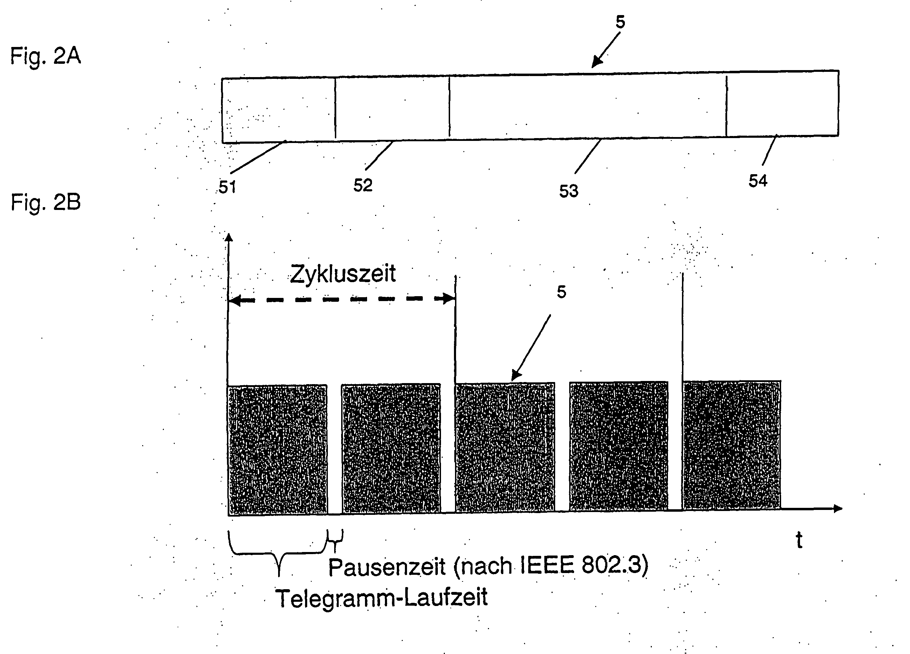

Ein Ethernet-Telegramm 5, dessen Struktur in Fig. 2A schematisch gezeigt ist, kann bis zu 1500 Bytes enthalten und setzt sich aus einem Kopfteil mit einer Startkennung 51, einer Präambel 52, die die Ziel- und Quelladresse und den Datenpakettyp kennzeichnet, einem Mittelteil 53 mit Daten und einem eine Checksumme enthaltenden Endteil 54, die als Fehlerkennungsmechanismus dient, zusammen.

Ein Sendevorgang von Ethernet-Telegramme über die Ethernet-Übertragungsstrecke 2 wird so ausgeführt, dass der in der CPU 12 eingesetzte Software-Treiber die zu versendenden Daten in Ethernet-Telegramme umsetzt, die, wenn der Ethernet-Controller 3 im DMA-Modus arbeitet, im physikalischen Speicher 11 des Knotens 1 abgelegt werden. Auf diese abgespeicherten Ethernet-Telegramme greift dann das Sende-Schieberegister 33 des Ethernet-Controllers 3 zu, um die Ethernet-Telegramme in das Schieberegister zu laden. Wenn unter Steuerung durch den Software-Treiber in der CPU 12 vom physikalischen Speicher 11 genügend Ethernet-Telegramme auf das Sende-Schieberegister 33 übertragen wurden und damit ein ausreichender Füllstand erreicht ist, gibt das Sende-Schieberegister 33 die zwischengespeicherten Ethernet-Telegramme über die Codiereinheit 31 auf die Ethernet-Übertragungsstrecke 2 aus. Eine Ethernet-Datenübertragung findet dabei nur dann statt, wenn das Ethernet-Netzwerk ruhig ist. Darüber hinaus ist in der Regel zusätzlich ein Kollisionsverhinderungsmechanismus auf der Ethernet-Übertragungsstrecke 2 vorgesehen.

Beim Empfang von Ethernet-Telegrammen werden die empfangenen Ethernet-Telegramme von der Decodiereinheit 32 im Empfangs-Schieberegister 34 zwischengespeichert, wobei der Ethernet-Controller 3 einen Interrupt im Knoten 1 auslöst. Dieser Interrupt veranlasst den Software-Treiber der CPU 12 im Knoten 1, die empfangenen Telegramme über den DMA-Modus in den physikalischen Speicher 11 überzuführen und dann an das Betriebssystem im Knoten zur Verarbeitung weiterzuleiten.

Das Ethernet-Konzept wird vor allem deshalb als Kommunikationsprotokoll für Netzwerksysteme genutzt, da Standard-Hardware- und -softwarekomponenten verwendet werden können und darüber hinaus eine hohe Datenübertragungsrate möglich ist. Beim Einsatz des Ethernet-Standards in industrieller Umgebung, insbesondere für Automatisierungsaufgaben, muss das Ethernet-Protokoll aber eine Echtzeit-Datenübertragung gewährleisten. Um zuverlässig eine Echtzeitanwendung, wie z. B. eine Maschinensteuerung mithilfe eines Ethernet-Netzwerkes ausführen zu können, ist ein Datenaustausch mit Zykluszeiten von 50 $\mu$sec bei zulässigen Jitterzeiten, d.h. Abweichungen von der gewünschten Zykluszeit von 10 $\mu$sec erforderlich.

Wenn ein Steuerungsrechner, der einen Knoten 1 in einem Ethernet-Netzwerk darstellt, Sensoren oder Aktoren, die als weitere Knoten an die Ethernet-Übertragungsstrecke 2 angebunden sind, in Echtzeit steuern soll, werden vom Steuerungsrechner in jeden Steuerungszyklus mithilfe des in seiner CPU 12 eingespeicherten Software-Treibers Ethernet-Telegramme 5 an den zugehörigen Ethernet-Controller 3 zum Senden übergeben. Der Ethernet-Controller 3 wird dann die entsprechenden Ethernet-Telegramme 5, vorzugsweise per DMA-Modus in sein Sende-Schieberegister 33 laden und ab einem bestimmten Füllstand dieses Senderegisters mit dem Versenden der Ethernet-Telegramme auf der Ethernet-Übertragungsstrecke 2 beginnen.

In dieser Sendeabfolge sind jedoch mehrere jitterbehaftete Vorgänge enthalten, deren Jitter sich im ungünstigsten Fall aufsummiert. Ein erster Jitter ergibt sich bereits aus den schwankenden Interrupt-Latenzzeiten des Betriebssystems des Steuerungsrechners und des Software-Treibers beim Umsetzen der Ethernet-Telegramme. Weiterhin treten Laufzeitschwankungen des bis zum Versenden des Ethernet-Telegrammen durchlaufenden Datencodes auf. Bei modernen Steuerungsrechnern, die über einen Cache-Speicher verfügen, schwanken zusätzlich auch die Laufzeiten ein und desselben durchlaufenden Datencodes, da je nach Cache-Inhalt unterschiedlich lange auf den angeforderten Speicher gewartet werden muss. Weitere Jitter ergeben sich zudem bei der Übergabe der Ethernet-Telegramme an den Ethernet-Controller. Der Ethernet-Controller ist über ein Bussystem, z.B. einen PCI-Bus, an den Steuerungsrechner, angebunden. Da der Bus auch von anderen Systemteilen des Steuerungsrechners genutzt wird, kann es bei der Buszuteilung zu unterschiedlich langen Wartezeiten beim Zugriff des Ethernet-Controllers auf den physikalischen Speicher zur Übergabe der Ethernet-Telegramme an das Sende-Schieberegister kommen. Auch dann, wenn der Ethernet-Controller nicht per DMA-Übertragungsmodus arbeitet, sondern die Daten über die CPU aus dem physikalischen Speicher in das Sende-Schieberegister des Ethernet-Controllers übertragen werden, treten ähnliche Jitter bei der Buszuteilung auf. Weiterhin wird das Senden der Ethernet-Telegramme je nach Füllstand der Sende-Schieberegister unterschiedlich lang verzögert. Wenn sich alle genannten jitterbehafteten Vorgänge aufsummieren, besteht die Gefahr, dass der sich ergebende Gesamtjitter höher als der für die jeweilige Echtzeitanwendung zulässige Jitter ist und dann keine Echtzeitsteuerung mehr gewährleistet wird.

Um nicht, wie herkömmlicherweise aufwändige Verfahren zur Angleichung der Zeitbasis zwischen den einzelnen Knoten und damit zur Kompensation der Kommunikationsjitter ausführen zu müssen, wird erfindungsgemäß der Ethernet-Controller 3 über den Software-Treiber auf der CPU 12 des Rechner-Knotens 1 so programmiert, dass ohne Pause Ethernet-Telegramme 5 aus dem Sende-Schieberegister 33 versendet werden. Dabei wird das Sende-Schieberegister 33 und die angeschlossene Codiereinheit 31 des Ethernet-Controllers 3 so gesteuert, dass im Anschluss an ein gesendetes Ethernet-Telegramm direkt das nächste Ethernet-Telegramm unter Einhaltung der in der Ethernet-Übertragungsnorm definierten Pausezeit gesendet wird.

Um zu gewährleisten, dass bei einer vorgegebenen Zykluszeit der auszuführenden Echtzeitanwendung kontinuierlich Ethernet-Telegramme versendet werden, berechnet der Software-Treiber der CPU 12, wie viele und wie lange Ethernet-Telegramme versendet werden müssen, um die vorgegebene Zykluszeit exakt einzuhalten. Der Softwaretreiber stellt die zu versendenden Daten 53 gemäß der Ethernet-Übertragungsnorm in entsprechend lange Ethernet-Telegramme 5 mit Startkennung 51, Präambel 52 und Checksumme 54 zusammen und legt sie im physikalischen Speicher 11 des Knotens 1 ab. Das Sende-Schieberegister 33 des Ethernet-Controllers 3 greift dann auf diese Ethernet-Telegramme 5 zu und speichert sie zwischen. Ab einem gewissen Füllstand im Sende-Schieberegister 33 wird dann mit dem Sendevorgang begonnen, wobei kontinuierlich Ethernet-Telegramme versendet werden, wie in Fig. 2B gezeigt ist. Hier ist ein Sendevorgang dargestellt, bei dem innerhalb einer vorgegebenen Zykluszeit zwei gleich lange Telegramme unter Einhaltung der vorgeschriebenen Pausenzeit versendet werden.

Mithilfe des im Ethernet-Controller 3 integrierten Sende-Schieberegisters 33 wird die Bereitstellung der Ethernet-Telegramme durch den Software-Treiber der CPU 13 im physikalischen Speicher 11 des Knotens 1 vom Sendezeitpunkt dieser Ethernet-Telegramme entkoppelt, so dass der bei der Echtzeitanwendung und die bei der Übertragung der Ethernet-Telegramme auf den Ethernet-Controller 3 entstehenden Jitter ausgeglichen werden. Da das Timing des Sendevorgangs ausschließlich vom Ethernet-Controller 3 und der nachgeschalteten Übertragungsphysik der Ethernet-Übertragungsstrecke 2 abhängt und der Ethernet-Controller aus seinem Sende-Schieberegister 33 Ethernet-Telegramme 5 kontinuierlich sendet, ist eine exakte Wiederholbarkeit und damit ein jitterfreies Senden möglich.

Um ein kontinuierliches Senden der Ethernet-Telegramme zu ermöglichen, ist die Echtzeitanwendung im Knoten über den Software-Treiber der CPU 12 auf den Ethernet-Controller 3 synchronisiert. Der Ethernet-Controller 3 legt die Zeitbasis fest, auf die die Echtzeitanwendung auf dem Steuerungsrechner 1 synchronisiert ist. Dadurch wird sichergestellt, dass vom Software-Treiber der CPU 12 immer genügend zu sendende Ethernet-Telegramme an den Ethernet-Controller 3 übergeben werden, um zu verhindern, dass das Sende-Schieberegister 33 des Ethernet-Controllers 3 leerläuft, und so Telegrammverzögerungen auftreten, die zu einer Zykluszeitverletzung führen würden. Weiterhin wird durch die Synchronisierung der Echtzeitanwendung im Knoten 1 auf die Zeitbasis des Ethernet-Controllers 3 gewährleistet, dass nicht zu viele Ethernet-Telegramme an den Ethernet-Controller 3 übergeben werden und somit ein Überlauf im Sende-Schieberegister 33 stattfindet und die Ethernet-Telegramme nicht mehr schnell genug versendet werden können.

Bei der Berechnung der Anzahl und der Länge in einem Zyklus der Echtzeitanwendung zu versendenden Ethernet-Telegramme berücksichtigt der Software-Treiber der CPU 12 im Knoten 1 sowohl die auf der Ethernet-Übertragungsstrecke 2 verwendete Baudrate als auch die bei der Verkapselung der zu versendenden Daten automatisch eingefügten zusätzlichen Daten, d.h. Startkennung 51, Präambel 52 und Checksumme 54, sowie die zwischen den Ethernet-Telegrammen einzuhaltenden Pausenzeiten. Diese zusätzlichen Signale sind in der Ethernet-Norm IEEE 802.3 festgelegt und betragen bei einem 100-Base-TX-Ethernet, also einem Fast Ethernet mit 100 MBaud für die Startkennung 8 Bit, für die Präambel 56 Bit, für die Checksumme 32 Bit und die Pausezeit 69 Bit.

Soll nun eine Zykluszeit der Echtzeitanwendung von x μsec erreicht werden, dann gilt folgende Formel: (L ist die maximale Bitlänge des Ethernet-Telegramms)

$$L = (x \cdot 100) - (8 + 56 + 32 + 69)$$

Für eine Zykluszeit von 100 μsec ergibt sich dann:

$$L = 9808 \text{ Bits} = 1226 \text{ Bytes.}$$

Der Software-Treiber der CPU 12 im Knoten 1 kann also in einer Zykluszeit von 100 μsec ein oder auch mehrere gleich lange Telegramme mit einer Gesamtlänge einschließlich der Pausezeiten von 1226 Bytes versenden. Wenn z.B. zwei Telegramme versendet werden, so beträgt die Bytelänge dann 613 Bytes pro Telegramm (einschließlich Pausezeit). Eine Aufteilung in mehrere Telegramme ist dann zwingend erforderlich, wenn die bei einer Zykluszeit sich ergebende Telegrammlänge größer als die maximale Ethernet-Telegramme von 1500 Byte ist. Es müssen dann immer entsprechend mehrere Ethernet-Telegramme zur Nutzung der vollen Zykluszeit gesendet werden. Wird z.B. eine Zykluszeit von 500 μsec vorgegeben, können fünf Telegramme mit je 1226 Byte (100 μsec) gesendet werden.

Alternativ zu Vorgabe einer Zykluszeit besteht auch die Möglichkeit, um einen kontinuierlichen Versand von Ethernet-Telegramme zu erreichen, die Länge der zu versendenden Ethernet-Telegramme vorzugeben, um daraus dann die notwendige Zykluszeit abzuleiten. Der Software-Treiber der CPU berechnet in diesem Fall aus der Vorgabe der Länge der Ethernet-Telegramme und der maximal zulässigen Dauer des Steuerzyklus, um eine Echtzeitanwendung, wie z. B. eine Maschinensteuerung mithilfe der Ethernet-Netzwerkes ausführen zu können, die optimale Zykluszeit, die einen kontinuierlichen Versand der Ethernet-Telegramme gewährleistet. Der Softwaretreiber stellt dann wiederum die zu versendenden Daten gemäß der Ethernet-Übertragungsnorm in entsprechend lange Ethernet-Telegramme mit Startkennung 51, Präambel 52 und Checksumme 54 zusammen und legt sie im physikalischen Speicher 11 des Knotens 1 ab. Das Sende-Schieberegister 33 des Ethernet-Controllers 3 greift anschließend auf diese Ethernet-Telegramme 5 zu und speichert sie zwischen. Ab einem gewissen Füllstand im Sende-Schieberegister 33 wird dann mit dem Sendevorgang begonnen, wobei kontinuierlich Ethernet-Telegramme innerhalb der berechneten Zykluszeit unter Einhaltung der vor-geschriebenen Pausezeit versendet werden.

Beim erfindungsgemäßen Sendevorgang, bei dem quasi kontinuierlich gesendet wird, muss weiter gewährleistet sein, dass auf dem Sendekanal keine Kollisionen auftreten, da dann der Ethernet-Controller die Übertragung unterbrechen und erst später wieder aufnehmen muss. Eine geeignete Topologie des Ethernet-Netzwerkes für einen kollisionsfreien Sendevorgang stellt dabei eine Peer-zu-Peer-Verbindung zwischen den Knoten dar. Es besteht auch die Möglichkeit, mehrere Teilnehmer über einen Switch, der Kollisionen verhindert, anzusteuern. Auch eine ringförmige Netztopologie von mehreren Knoten ist möglich, wobei dann die Ethernet-Telegramme mit geringer Verzögerung von Knoten zu Knoten weitergeleitet und anschließend an den ursprünglichen Sende-Knoten zurückgeschickt werden.

Echtzeitanwendungen benötigen in der Regel auch Rückmeldungen der angesteuerten Teilnehmer. In diesem Fall ist die Ethernet-Übertragungsstrecke 2 als Vollduplex-Übertragungsstrecke mit getrenntem Sende- und Empfangskanal ausgebildet, um die zu versendenden Ethernet-Telegramme nicht durch empfangene Telegramme mit den Rückmeldungen zu beeinflussen. Die Menge der zurückgesendeten Daten darf dabei auch nicht die Menge der ursprünglich gesendeten Daten überschreiten, da diese dem Maximum der Übertragungskapazität entsprechen.

**Patentansprüche**

**1.** Verfahren zum Versenden von Daten in Form von Ethernet-Telegrammen durch einen Knoten auf einer Ethernet-Übertragungsstrecke(2), mit den Verfahrensschritten

- Umsetzen der zu versendenden Daten durch eine Steuereinheit (1; 11, 12) des Knotens gemäß einer Übertragungsnorm des Ethernet-Protokolls, um Ethernet-Telegramme bereitzustellen, und

- zyklisches Versenden der bereitgestellten Ethernet-Telegramme durch eine Sendeeinheit (3; 31, 33) des Knotens mit der vorgegebenen Ethernet-Übertragungsnorm, wobei die zu versendenden Daten Echtzeitdaten sind und eine die zu versendenden Echtzeitdaten erzeugende Echtzeitanwendung mit dem Sendevorgang der Ethernet-Telegramme synchronisiert wird, **dadurch gekennzeichnet, dass** der von der Sendeeinheit (3; 31, 33) des Knotens durchgeführte Sendevorgang der bereitgestellten Ethernet-Telegramme von der Steuereinheit (1; 11, 12) des Knotens so gesteuert wird, dass im Anschluss an ein gesendetes Ethernet-Telegramm direkt das nächste Ethernet-Telegramm unter Einhaltung der in der Ethernet-Übertragungsnorm definierten Pausezeit gesendet wird, um so während der gesamten Zykluszeit kontinuierlich Ethernet-Telegramme auf die Ethernet-Übertragungsstrecke auszugeben, und die Zeitbasis, auf die die Echtzeitanwendung durch die Steuereinheit (1; 11, 12) synchronisiert wird, von der Sendeeinheit (3; 31, 33) festgelegt wird.

2. Verfahren nach Anspruch 1, **dadurch gekennzeichnet, dass** zum fortlaufenden Senden der bereitgestellten Ethernet-Telegramme bei einer vorgebenen Länge der Ethernet-Telegramme die Länge der Zykluszeit im Rahmen der maximal zulässigen Dauer des Zyklus angepasst wird, um während der gesamten Zykluszeit kontinuierlich Ethernet-Telegramme auf die Ethernet-Übertragungsstrecke auszugeben.

3. Verfahren nach Anspruch 1, **dadurch gekennzeichnet, dass** zum fortlaufenden Senden der bereitgestellten Ethernet-Telegramme bei einer vorgegebenen Zykluszeit die Anzahl und/oder die Länge der in einem Zyklus zu versendenden Ethernet-Telegramme angepasst wird, um während der gesamten vorgebenen Zykluszeit kontinuierlich Ethernet-Telegramme auf die Ethernet-Übertragungsstrecke auszugeben.

4. Verfahren nach Anspruch 3, **dadurch gekennzeichnet, dass** zum Berechnen der Anzahl und/oder der Länge der in einem Zyklus zu versendenden Ethernet-Telegramme die auf der Ethernet-Übertragungsstrecke verwendete Baudrate, die Länge der beim Umsetzen der Daten gemäß der Übertragungsnorm des Ethernet-Protokolls jeweils in das Ethernet-Telegramm eingefügten Startkennung, Präambel und Checksumme und die Länge der zwischen den zu versendeten Ethernet-Telegrammen einzuhaltenden Pausenzeit berücksichtigt werden.

5. Verfahren nach Anspruch 4, **dadurch gekennzeichnet, dass** die maximale Bitlänge L des in einem Zyklus zu versendenden Ethernet-Telegramms bei einer auf der Ethernet-Übertragungsstrecke verwendeten Baudrate von ba Mbäud, einer Zykluszeit von zy μs, einer Startkennungslänge von st Bit, einer Präambellänge von pr Bit, einer Checksummenlänge von ch Bit und einer Pausenzeit von pa Bit wie folgt berechnet wird:

$$L = (ba * zy) - (st + pr + ch + pa).$$

6. Verfahren nach Anspruch 5, **dadurch gekennzeichnet, dass** dann, wenn die maximale Bitlänge L größer als die maximal mögliche Bitlänge der Ethernet-Telegramme ist, die Anzahl und die Länge der zusendeten Ethernet-Telegramme so gewählt wird, dass in einem Zyklus mehrere Ethernet-Telegramme versendet werden, deren gemeinsame Bitlänge der Zykluszeit entspricht.

7. Verfahren nach einem der Ansprüche 1 bis 6, **dadurch gekennzeichnet, dass** zum fortlaufenden Senden der bereitgestellten Ethernet-Telegramme die bereitgestellten Telegramme in einem Zwischenspeicher zwischengespeichert werden und der Sendevorgang gestartet wird, sobald ein vorgegebener Füllstand im Zwischenspeicher erreicht ist.

8. Knoten für Ethernet-Netzwerk mit
einer Steuereinheit (1; 11, 12) zum Umsetzen von zu versendenden Daten gemäß einer Übertragungsnorm des Ethernet-Protokolls, um Ethernet-Telegramme zu bereitzustellen, und
einer Sendeeinheit (3; 31, 33) zum zyklischen Versenden der bereitgestellten Ethernet-Telegramme mit einer vorgebenen Ethernet-Übertragungsnorm auf einer Ethernet-Übertragungsstrecke (2),
wobei die zu versendenden Daten Echtzeitdaten-einer auf dem Knoten ausgeführten Echtzeitanwendung sind, und wobei die Steuereinheit (1; 11, 12) zum Synchronisieren der die zu versendenden Echtzeitdaten erzeugende Echtzeitanwendung mit dem Sendevorgang der Ethernet-Telegramme ausgelegt ist, **dadurch gekennzeichnet, dass,** die Steuereinheit (1; 11, 12) den Sendevorgang der bereitgestellten Ethernet-Telegramme durch die Sendeeinheit (3; 31, 33) so steuert, dass im Anschluss an ein gesendetes Ethernet-Telegramm direkt das nächste Ethernet-Telegramm unter Einhaltung der in der Ethernet-Übertragungsnorm definierten Pausezeit gesendet wird, um so während der gesamten Zykluszeit kontinuierlich Ethernet-Telegramme auf die Ethernet-Übertragungsstrecke (2) auszugeben, und
die Sendeeinheit (3; 31, 33) ausgelegt ist, die Zeitbasis festzulegen, auf die die Echtzeitanwendung durch die Steuereinheit (1; 11, 12) synchronisiert ist.

9. Knoten nach Anspruch 8, **dadurch gekennzeichnet, dass** die Steuereinheit (1; 11, 12) zum Anpassen der Länge der Zykluszeit bei einer vorgebenen Länge der zu versendenden Ethernet-Telegramme im Rahmen der maximal zulässigen Dauer des Zyklus ausgelegt ist, um während der gesamten Zykluszeit kontinuierlich Ethernet-Telegramme auf die Ethernet-Übertragungsstrecke (2) auszugeben.

10. Knoten nach Anspruch 8, **dadurch gekennzeichnet, dass** die Steuereinheit (1; 11, 12) zum Anpassen der Anzahl und/oder der Länge der in einem Zyklus zu versendenden Ethernet-Telegramme an eine vorgegebene Zykluszeit ausgelegt ist, um während der gesamten vorgegebenen Zykluszeit kontinuierlich Ethernet-Telegramme auf die Ethernet-Übertragungsstrecke (2) auszugeben.

11. Knoten nach einem der Ansprüche 8 bis 10, **dadurch gekennzeichnet, dass** die Sendeeinheit (3; 31, 33) einem Zwischenspeicher (33) zum Zwischenspeichern der bereitgestellten Ethernet-Telegramme aufweist, wobei die Steuereinheit (1; 11, 12) zum Starten des Sendevorgangs in Abhängigkeit von einem vorgegebenen Füllstand im Zwischenspeicher (33) ausgelegt ist.

12. Ethernet-Netzwerk mit Ethernet-Übertragungsstrecke (2) und einer Mehrzahl von mit der Ethernet-Übertragungsstrecke verbundenen Knoten (1) nach einem der Ansprüche 8 bis 11, **dadurch gekennzeichnet, dass** der Sendekanal der Ethernet-Übertragungsstrecke (2) ausgelegt ist, die Ethernet-Telegramme kollisionsfrei zu übertragen.

13. Ethernet-Netzwerk nach Anspruch 12, **dadurch gekennzeichnet, dass** die Ethernet-Übertragungsstrecke (2) eine ringförmig angeordnete Topologie aufweist und die vom Sende-Knoten (1) versandten Ethernet-Telegramme von einem Knoten zum nächsten Knoten weitergeleitet werden.

**Claims**

1. A method for transmitting data in the form of Ethernet messages via a node on an Ethernet transmission link (2), having the following method steps

    - converting the data to be sent by means of a control unit (1; 11, 12) of the node according to a transmission standard of the Ethernet protocol, in order to provide Ethernet messages, and
    - cyclically transmitting the provided Ethernet messages by means of a transmission unit (3; 31, 33) of the node using the prescribed Ethernet transmission standard, whereby the data to be sent are real-time data and a real-time application generating the real-time data to be sent is synchronized with the transmission process of the Ethernet messages,
    **characterized in that**
    the transmission process of the Ethernet messages carried out by the transmission unit (3; 31, 33) of the node is controlled by the control unit (1; 11, 12) of the node in such a way that following an Ethernet message which has been sent the next Ethernet message is sent directly, while observing the break time defined in the Ethernet transmission standard, so as to output Ethernet messages onto the Ethernet transmission link continuously during the entire cycle time, and the time basis to which the real-time application is synchronized by the control unit (1; 11, 12) is determined by the transmission unit (3; 31, 33).

2. The method as claimed in claim 1, **characterized in that** for ongoing transmission of the provided Ethernet messages the length of the cycle time is adapted, for a prescribed length of the Ethernet messages, within the framework of the maximum permissible duration of the cycle in order to output Ethernet messages onto the Ethernet transmission link continuously during the entire cycle time.

3. The method as claimed in claim 1, **characterized in that** for ongoing transmission of the provided Ethernet messages the number and/or the length of the Ethernet messages which are to be sent in a cycle is adapted, for a prescribed cycle time, in order to output Ethernet messages onto the Ethernet transmission link continuously during the entire prescribed cycle time.

4. The method as claimed in claim 3, **characterized in that** for calculating the number and/or the length of the Ethernet messages which are to be sent in a cycle the baud rate used on the Ethernet transmission link, the length of the start identifier, preamble and checksum inserted into the respective Ethernet message when the data are converted in line with the transmission standard of the Ethernet protocol, and the length of the break time to be observed between the Ethernet messages which are to be sent are taken into account.

5. The method as claimed in claim 4, **characterized in that** the maximum bit length L of the Ethernet message which is to be sent in a cycle is calculated as follows:

$$L = (ba * zy) - (st + pr + ch + pa),$$

where the baud rate used on the Ethernet transmission link is ba Mbaud, the cycle time is zy μs, the length of the start identifier is st bits, the length of the preamble is pr bits, the length of the checksum is ch bits and the break time is pa bits.

6. The method as claimed in claim 5, **characterized in that** when the maximum bit length L is greater than the maximum possible bit length of the Ethernet messages the number and length of the Ethernet messages to be sent are chosen such that in one cycle a plurality of Ethernet messages are sent whose total bit length corresponds to the cycle time.

7. The method as claimed in one of claims 1 to 6, **characterized in that** for ongoing transmission of the provided Ethernet messages the provided messages are buffer-stored in a buffer store and the transmission operation is started as soon as a prescribed filling level has been achieved in the buffer store.

8. A node for an Ethernet network, having a control unit (1; 11, 12) for converting data which are to be sent according to a transmission standard from the Ethernet protocol in order to provide Ethernet messages, and
a transmission unit (3; 31, 33) for cyclically transmitting the provided Ethernet messages using a prescribed Ethernet transmission standard on an Ethernet transmission link (2),
the data to be sent being real-time data of a real-time application executed on the node, and
the control unit (1; 11, 12) being configured to synchronize the real-time application generating the real-time data to be sent with the transmission process of the Ethernet messages,
**characterized in that**
the control unit (1; 11, 12) controls the transmission operation for the provided Ethernet messages by the transmission unit (3; 31, 33) such that following a transmitted Ethernet message the next Ethernet message is sent directly, while observing the break time defined in the Ethernet transmission standard, so as to output Ethernet messages onto the Ethernet transmission link (2) continuously during the entire cycle time, and
the transmission unit (3; 31, 33) is configured to determine the time basis to which the real-time application is synchronized by means of the control unit (1; 11, 12).

9. The node as claimed in claim 8, **characterized in that** the control unit (1; 11, 12) is designed to adapt the length of the cycle time, for a prescribed length of the Ethernet messages which are to be sent, within the framework of the maximum permissible duration of the cycle in order to output Ethernet messages onto the Ethernet transmission link (2) continuously during the entire cycle time.

10. The node as claimed in claim 8, **characterized in that** the control unit (1; 11, 12) is designed to adapt the number and/or length of the Ethernet messages which are to be sent in a cycle to a prescribed cycle time in order to output Ethernet messages onto the Ethernet transmission link (2) continuously during the entire prescribed cycle time.

11. The node as claimed in one of claims 8 to 10, **characterized in that** the transmission unit (3; 31, 33) has a buffer store (33) for buffer-storing the provided Ethernet messages, the control unit (1; 11, 12) being designed to start the transmission operation on the basis of a prescribed filling level in the buffer store (33).

12. An Ethernet network having an Ethernet transmission link (2) and a plurality of nodes (1) connected to the Ethernet transmission link as claimed in one of claims 8 to 11, **characterized in that** the transmission channel for the Ethernet transmission link (2) is designed to transmit the Ethernet messages without collision.

13. The Ethernet network as claimed in claim 12, **characterized in that** the Ethernet transmission link (2) has a ring-shaped topological arrangement and the Ethernet messages sent by the transmission node (1) are forwarded from one node to the next node.

**Revendications**

1. Procédé d'envoi de données sous forme de télégrammes Ethernet par l'intermédiaire d'un noeud d'un parcours (2) de transmission Ethernet, le procédé présentant les étapes qui consistent à :

- convertir les données à envoyer selon une norme de transmission du protocole Ethernet par une unité de commande (1; 11, 12) du noeud, pour préparer des télégrammes Ethernet,
- envoyer cycliquement selon la norme de transfert Ethernet prédéterminée par une unité d'envoi (3; 31, 33) du noeud les télégrammes Ethernet ainsi préparés, les données à envoyer étant des données en temps réel et une application en temps réel qui forme les données en temps réel à envoyer étant synchronisée avec l'opération d'envoi des télégrammes Ethernet, **caractérisé en ce que**

l'opération d'envoi exécutée par l'unité d'envoi (3; 31, 33) du noeud des télégrammes Ethernet ainsi préparés est commandée par l'unité de commande (1; 11, 12) du noeud de telle sorte qu'après l'envoi d'un télégramme Ethernet, le télégramme Ethernet suivant est envoyé directement en respectant la durée de pause définie dans la norme de transfert Ethernet, pour ainsi envoyer pendant toute la durée du cycle et en continu des télégrammes Ethernet sur le parcours de transmission Ethernet et

**en ce que** la base de temps sur laquelle l'application en temps réel est synchronisée par l'unité de commande (1; 11, 12) est définie par l'unité d'envoi (3; 31, 33).

2. Procédé selon la revendication 1, **caractérisé en ce que** pour envoyer en continu des télégrammes Ethernet préparés de longueur prédéterminée, la longueur de la durée du cycle est adaptée dans le cadre de la durée maximale admissible du cycle pour envoyer en continu des télégrammes Ethernet sur le parcours de transmission Ethernet pendant la totalité de la durée du cycle.

3. Procédé selon la revendication 1, **caractérisé en ce que** pour envoyer en continu des télégrammes Ethernet en cycles de durée prédéterminée, le nombre et/ou la longueur des télégrammes Ethernet à envoyer dans un cycle est adaptée dans le cadre de la durée maximale admissible du cycle pour envoyer en continu des télégrammes Ethernet sur le parcours de transmission Ethernet pendant la totalité de la durée du cycle.

4. Procédé selon la revendication 3, **caractérisé en ce que** les vitesses en bauds utilisées sur le parcours de transmission Ethernet, la longueur de l'identification initiale insérée dans chaque télégramme Ethernet lors de la conversion des données selon la norme de transmission du protocole Ethernet, le préambule et la somme de contrôle ainsi que la longueur de la durée de pause entre les télégrammes Ethernet à envoyer sont pris en compte pour calculer le nombre et/ou la longueur des télégrammes Ethernet à envoyer en un cycle.

5. Procédé selon la revendication 4, **caractérisé en ce que**, pour une durée de cycle de $zy$ µs, une longueur de l'identification initiale de $st$ bits, une longueur de préambule de $pr$ bits, une longueur de la somme de contrôle de $ch$ bits et une durée de pause de $pa$ bits, la longueur maximale $L$ des bits du télégramme Ethernet envoyés dans un cycle à un débit en bauds utilisé sur le parcours de transmission Ethernet de $ba$ Mbauds est calculée de la façon suivante : $L = (ba * zy) - (st + pr + ch + pa)$.

6. Procédé selon la revendication 5, **caractérisé en ce que** lorsque la longueur maximale $L$ des bits est supérieure à la longueur maximale possible des bits du télégramme Ethernet, le nombre et la longueur des télégrammes Ethernet envoyés sont sélectionnés de telle sorte que plusieurs télégrammes Ethernet dont la longueur commune des bits correspond à la durée d'un cycle soient envoyés en un cycle.

7. Procédé selon l'une des revendications 1 à 6, **caractérisé en ce que** pour envoyer de manière continue les télégrammes Ethernet préparés, les télégrammes Ethernet préparés sont conservés dans une mémoire intermédiaire et l'opération d'envoi est lancée dès que la mémoire intermédiaire a atteint un niveau de remplissage prédéterminé.

8. Noeud pour réseau Ethernet, présentant :

une unité de commande (1; 11, 12) qui convertit les données à envoyer selon une norme de transmission du protocole Ethernet pour préparer des télégrammes Ethernet et
une unité d'envoi (3; 31, 33) qui envoie cycliquement sur un parcours de transmission Ethernet (2) les télégrammes Ethernet préparés selon une norme de transmission Ethernet prédéterminée,
les données à envoyer étant des données en temps réel d'une application en temps réel exécutée sur le noeud et l'unité de commande (1; 11, 12) étant conçue pour synchroniser sur l'opération d'envoi des télégrammes Ethernet l'application en temps réel qui forme les données en temps réel à envoyer,
**caractérisé en ce que**
l'unité de commande (1; 11, 12) lance l'opération d'envoi des télégrammes Ethernet préparés par l'unité d'envoi (3; 31, 33) de telle sorte qu'après l'envoi d'un télégramme Ethernet, le télégramme Ethernet suivant soit envoyé directement en respectant la durée de pause définie dans la norme de transfert Ethernet, pour ainsi envoyer en continu pendant toute la durée du cycle des télégrammes Ethernet sur le parcours (2) de transmission Ethernet et
**en ce que** l'unité d'envoi (3; 31, 33) est conçue pour définir la base de temps sur laquelle l'application en temps réel est synchronisée par l'unité de commande (1; 11, 12).

9.  Noeud selon la revendication 8, **caractérisé en ce que** pour une longueur prédéterminée des télégrammes Ethernet préparés, l'unité de commande (1; 11, 12) est conçue pour adapter la longueur de la durée d'un cycle dans le cadre de la durée maximale admissible du cycle, pour envoyer en continu des télégrammes Ethernet sur le parcours (2) de transmission Ethernet pendant la totalité de la durée du cycle.

10. Noeud selon la revendication 8, **caractérisé en ce que** l'unité de commande (1; 11, 12) est conçue pour adapter le nombre et/ou la longueur des télégrammes Ethernet à envoyer dans un cycle à une durée prédéterminée d'un cycle, pour envoyer en continu des télégrammes Ethernet sur le parcours (2) de transmission Ethernet pendant la totalité de la durée du cycle.

11. Noeud selon l'une des revendications 8 à 10, **caractérisé en ce que** l'unité d'envoi (3; 31, 33) présente une mémoire intermédiaire (33) qui conserve provisoirement les télégrammes Ethernet préparés, l'unité de commande (1; 11, 12) étant conçue pour lancer l'opération d'envoi en fonction d'un état de remplissage prédéterminé de la mémoire intermédiaire (33).

12. Réseau Ethernet doté d'un parcours (2) de transmission Ethernet de plusieurs noeuds (1) reliés au parcours de transmission Ethernet selon l'une des revendications 8 à 11, **caractérisé en ce que** le canal d'envoi du parcours (2) de transmission Ethernet est conçu pour transmettre les télégrammes Ethernet sans collision.

13. Réseau Ethernet selon la revendication 12, **caractérisé en ce que** le parcours (2) de transmission Ethernet présente une topologie annulaire et **en ce que** les télégrammes Ethernet envoyés par le noeud émetteur (1) sont transmis d'un noeud au suivant.

Fig. 1A

Fig. 1B

Fig. 2A

Fig. 2B

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02075465 A

**In der Beschreibung aufgeführte Nicht-Patentliteratur**

- **MANDEVILLE B ; SHAH A V.** Benchmarking Methodology for Ethernet Switches <draft-ietf-bmwg-ethernet-switches-00.txt>. *INTERNET DRAFT,* Dezember 1995, 1-14